# EUROPÄISCHE PATENTANMELDUNG

(11) **EP 1 345 404 A1**
(43) Veröffentlichungstag der Anmeldung: **17.09.2003**
(21) Anmeldenummer: 02005561.2
(22) Anmeldetag: 12.03.2002
(51) Int. Cl.: H04N 1/04

(54) **Verfahren zum pixelweisen Erzeugen von Bildern**

(71) Anmelder: Agfa-Gevaert AG, 51373 Leverkusen (DE)
(72) Erfinder: Klüter, Ulrich, 80339 München (DE)

(57) **Zusammenfassung**

Die Erfindung geht aus von einem Verfahren zum pixelweisen Erzeugen von Bildern auf einem Bildträger (7), bei dem eine Vielzahl von Pixeln gleichzeitig erzeugt wird, mit den folgenden Schritten: Erzeugen wenigstens eines Teilbildes auf dem Bildträger (7) mit Abständen zwischen den einzelnen Bildpunkten (8), wobei jedem Bildpunkt ein Pixelgenerator (6) zugeordnet ist, und Erzeugen wenigstens eines weiteren Teilbildes auf dem Bildträger (7) in den Zwischenräumen der Bildpunkte (8) des ersten Teilbildes. Erfindungsgemäß wird jeder Bildpunkt ein Teilbildes von einem Pixelgenerator (6) erzeugt, der keinen der Nachbar-Bildpunkte aus dem ersten Teilbild erzeugt hat.

## Beschreibung

Die Erfindung betrifft ein Verfahren zum pixelweisen Erzeugen von Bildern auf einem Bildträger gemäß dem Oberbegriff von Anspruch 1.

Bei der Abbildung einer Bildinformation auf ein lichtempfindliches Material ist man bestrebt, die räumliche Auflösung des Bildes zu maximieren. Dies ist insbesondere dann von Bedeutung, wenn die bildgebende Vorrichtung elektronisch arbeitet. Bei den elektronischen bildgebenden Vorrichtungen wird die Bildinformation in Form einzelner Pixel durch Anzeige- oder Bildelemente zusammengesetzt, wobei die Anzeige- oder Bildelemente einzeln elektronisch ansteuerbar sind. Diese elektronischen, bildgebenden Vorrichtungen weisen bei vertretbaren Kosten jedoch eine Auflösung auf, die für Abbildungen hoch aufgelöster Bilder in fotografischer Qualität nicht ausreichend ist.

Es soll daher eine Auflösung des auf dem lichtempfindlichen Material erzeugten Bildes erreicht werden, die höher als die Auflösung einer beispielsweise verwendeten LCD-Einrichtung ist. Die Vorrichtung ist daher so aufgebaut, dass mit jeder Belichtung nur ein Teil der Fläche des lichtempfindlichen Materials belichtet wird. Dies lässt sich unter anderem dadurch erreichen, dass ein Teil eines jeden LCD-Elements durch eine Maske abgedeckt wird. Die bei der Belichtung eines ersten Teilbildes nicht belichteten Bereiche des lichtempfindlichen Materials werden mit den folgenden Belichtungen der restlichen Teilbilder belichtet. Auf diese Weise wird jedes LCD-Element mehrmals auf unterschiedlichen Bereichen des lichtempfindlichen Materials - jeweils mit unterschiedlicher Bildinformation - abgebildet. Es entsteht dabei in der Bildebene ein flächendeckendes Bild mit einem Vielfachen der Auflösung der LCD-Einrichtung.

Dieses Verfahren zur Auflösungserhöhung wird bei Geräten angewandt, die Bildinformationen mit Hilfe einer LCD- (liquid crystal device), einer DMD- (digital mirror device) Anzeigevorrichtung oder einem sonstigen Lichtmodulator auf ein lichtempfindliches Material wie Fotopapier abbilden.

Bei einer LCD-Vorrichtung haben die einzelnen LCD-Elemente einen schwarzen Rand (Black Matrix), der bei scharfer Abbildung auf dem Fotopapier zu einer Belichtungslücke führt. Versetzt man die Abbildung des LCDs auf das Fotopapier entsprechend, so kann man die Belichtungslücken durch Ansteuerung des LCDs mit den noch fehlenden Bilddaten füllen. Auf diese Weise lässt sich aus mehreren Teilbildern ein komplettes Bild mit hoher Auflösung erzeugen. Die Black Matrix der LCD-Vorrichtung deckt beispielsweise drei Viertel der LCD-Fläche ab, In diesem Fall grenzt an den aktiven Teil eines jeden LCD-Elements - sowohl in vertikaler als auch in horizontaler Richtung - eine schwarze Fläche, die die gleiche Fläche wie der aktive Teil des LCD-Elements hat.

Spaltet man nun die Daten eines hochaufgelösten Bildes in vier elektronische Teilbilder auf und erzeugt mit der LCD-Vorrichtung z.B. alle geraden Punkte in x-Richtung (0, 2, 4..) und alle geraden Punkte in y-Richtung (0, 2, 4..) als ein erstes Teilbild, alle geraden Punkte in x-Richtung (0, 2, 4..) und alle ungeraden Punkte in y-Richtung (1, 3, 5..) als ein zweites Teilbild, alle ungeraden Punkte in x-Richtung (1, 3, 5..) und alle geraden Punkte in y-Richtung (0, 2, 4..) als ein drittes Teilbild und alle ungeraden Punkte in x-Richtung (1, 3, 5..) und alle ungeraden Punkte in y-Richtung (1, 3, 5..) als ein viertes Teilbild, so lässt sich durch die sukzessive Belichtung der vier Teilbilder die Auflösung des Bildes in der Photoschicht gegenüber der Auflösung der LCD-Vorrichtung vervierfachen. Hat die LCD-Vorrichtung z.B. 1600 x 1200 Elemente, so ergibt sich auf diese Art ein belichtetes Bild mit 3200 x 2400 Bildpunkten.

Aus der EP 0 987 875 ist ein Verfahren zur Wiedergabe eines digitalen Bildes bekannt, wobei im wesentlichen eine LCD-Vorrichtung mittels eines Objektivs auf einen Bildträger abgebildet wird. Mit einer drehbaren Glasplatte wird ein seitlicher Versatz der abgebildeten Pixel in der Bildebene erzeugt und der Bildträger einmal oder mehrmals bei jeder Verschiebung belichtet.

Bekannte LCD-Vorrichtungen weisen oftmals, meist durch Fehler im Produktionsprozess, einzelne Pixelfehler (z.B. sogenannte bright spots) auf. Diese defekten LCD-Elemente machen sich auf dem erzeugten Bild besonders störend bemerkbar, wenn sie eine gewisse Größe überschreiten. Bei dem oben beschriebenen Verfahren nach dem Stand der Technik werden vier Abbildungen eines solchen defekten LCD-Elements direkt nebeneinander auf das lichtempfindliche Material belichtet, so dass eine gut sichtbarer Makrobildpunkt entsteht.

Der Erfindung liegt die Aufgabe zugrunde, die Auflösung beim pixelweisen Erzeugen von Bildern auf einem Bildträger durch sequentielles Erzeugen von Teilbildern zu erhöhen, ohne dass der durch einen defekten Pixelgenerator bedingte Pixelfehler dadurch verstärkt wird.

Diese Aufgabe wird erfindungsgemäß gelöst durch ein Verfahren mit den kennzeichnenden Merkmalen von Anspruch 1. Bevorzugte Ausführungsformen sind Gegenstand der Unteransprüche.

Die erfindungsgemäße Lösung der Aufgabe beruht darauf, dass die Abbildung bei gegenläufig versetzter Ansteuerung des LCDs um mehrere Pixel versetzt wird. Durch die Anordnung von zwei schwenkbaren optischen Elementen im Strahlengang hintereinander, deren Schwenkachsen rechtwinklig zueinander ausgerichtet sind, ist eine Verschiebung des Abbilds der LCD-Elemente auf der lichtempfindlichen Schicht in jede beliebige Richtung möglich. Mit einfachen Mitteln lässt sich die Bewegung der schwenkbaren optischen Elemente exakt begrenzen, so dass die Abbildung der Pixel auf einer lichtempfindlichen Schicht mit hoher Genauigkeit reproduzierbar ist, ohne dass die Stellung des optischen Elements für die Verschiebung erst erfasst werden muss.

Dadurch dass die Abbildungen der LCD-Elemente in jede beliebige Richtung um eine beliebige Strecke verschoben werden können, lässt sich der Abbildungsvorgang so steuern, dass ein defektes LCD-Element in den Bildern möglichst wenig auffällt. Für die Belichtung von Bilddaten wird daher die Verschiebung der Abbildung der LCD-Elemente so gesteuert, dass die einzelnen Abbildungen jedes LCD-Elements nicht direkt nebeneinander sondern weiter auseinander liegen. Auf diese Weise ergibt sich eine der Anzahl der Verschiebungen entsprechende Zahl kleiner, voneinander beabstandeter Bildpunkte, die mit bloßem Auge kaum erkennbar sind.

Insbesondere werden vier Teilbilder erzeugt, wobei die Abbilder eines jeden LCD-Elements die Eckpunkte eines Rechtecks bilden. Der Abstand dieser Eckpunkte, also derjenigen Bildpunkte, die jeweils von einem LCD-Element stammen, beträgt wenigstens das Zweifache der jeweiligen Seitenkante eines Bildpunktes.

Die Abbilder der LCD-Elemente können auch in x- und y-Richtung um unterschiedliche Beträge verschoben werden, d.h. der Abstand der Bildpunkte zwischen je zwei Teilbildern in eine erste Richtung und der Abstand der Bildpunkte zwischen je zwei Teilbildern in eine zweite Richtung kann unterschiedlich sein.

Bei Farbbildern werden die unterschiedlichen Teilbilder in allen zu belichtenden Farben auf das lichtempfindliche Material aufbelichtet. Geht man also von vier Teilbildern aus, werden diese vier Teilbilder üblicherweise für jede Farbe, also z. B. jeweils für Blau, Grün, und Rot erzeugt. Um nun die Erkennbarkeit von fehlerhaften LCD-Elementen in dem resultierenden Bild weiter zu vermindern, kann der Abstand der Bildpunkte zwischen den jeweiligen Teilbildern bei den einzelnen Farben unterschiedlich gewählt werden. Das bedeutet, dass beispielsweise das zweite rote Teilbild gegenüber dem ersten roten Teilbild um einen anderen Betrag versetzt ist als das zweite grüne Teilbild gegenüber dem ersten grünen Teilbild.

Weitere Merkmale und Vorteile der Erfindung ergeben sich aus der folgenden Beschreibung von bevorzugten Ausführungsformen, wobei Bezug genommen wird auf die beigefügten Zeichnungen. Es zeigt:
- Fig. 1: einen Abbildungsvorgang nach dem Stand der Technik und
- Fig. 2: einen Abbildungsvorgang nach einer Ausführungsform der Erfindung.

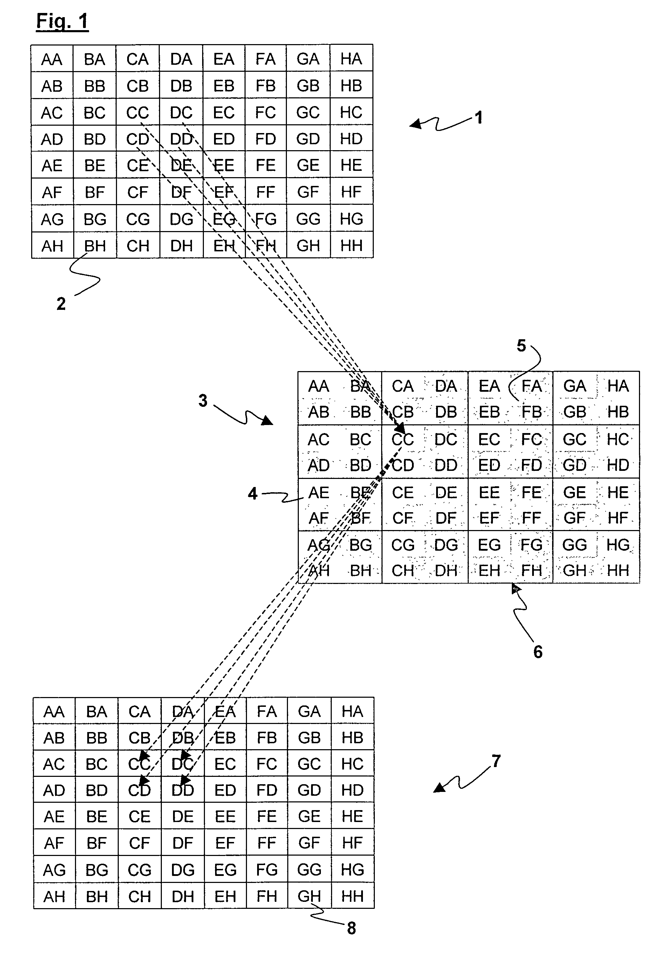

In Fig. 1 ist schematisch der Prozess der Abbildung von Pixeln eines in einem Speicher abgelegten hochaufgelösten Bildes mittels einer LCD-Vorrichtung mit geringerer Auflösung nach dem Stand der Technik gezeigt.

In Figur 1 ist mit dem Bezugszeichen 1 eine Speicherebene bezeichnet, in der die hochaufgelösten Bilddaten abgespeichert sind. Die Speicherebene 1 enthält eine Vielzahl von Speicherzellen 2. Die Information in den Speicherzellen 2 wird zur Ansteuerung einer LCD-Anzeigevorrichtung 3 verwendet, genauer zur Ansteuerung der Vielzahl von LCD-Elementen 6, aus der die LCD-Anzeigevorrichtung 3 besteht. In dem gezeigten Ausführungsbeispiel wird nacheinander immer nur ein Viertel der Bilddaten der Speicherebene 1 gleichzeitig durch die LCD-Vorrichtung 3 dargestellt. Die Bilddaten jeweils eines einzelnen Pixels sind mit Buchstabenkombinationen bezeichnet, wobei der erste Buchstabe die Spalte und der zweite Buchstabe die Zeile der Matrix kennzeichnet. Ein erstes Teilbild besteht aus allen Pixeln, deren dafür notwendige Bilddaten mit Buchstabenkombinationen bezeichnet sind, wobei der erster Buchstabe A, C, E oder G und der zweiter Buchstabe ebenfalls A, C, E oder G ist. Für ein zweites Teilbild werden die Bilddaten mit den ersten Buchstaben B, D, F oder H und den zweiten Buchstaben A, C, E oder G verwendet. Das dritte Teilbild benutzt Bilddaten mit Buchstabenkombinationen deren erster als auch zweiter Buchstabe ein B, D, F oder H ist, während die Bilddaten für das vierte Teilbild als ersten Buchstaben ein A, C, E oder G und als zweiten Buchstaben ein B, D, F oder H aufweisen.

Mit einer Lichtquelle und einer Abbildungsvorrichtung (beides nicht gezeigt) wird das durch die LCD-Vorrichtung 3 dargestellte Teilbild auf lichtempfindliches Papier projiziert. Die LCD-Elemente 6 der LCD-Vorrichtung 3 sind zu drei Viertel ihrer Fläche durch eine Black Matrix 5 abgedeckt, die bei der Abbildung auf das lichtempfindliche Papier zu einer Belichtungslücke führt. Das aktive Viertel eines jeden LCD-Elements 6 ist mit dem Bezugszeichen 4 versehen.

Um die Teilbilder nacheinander in der Bildebene erzeugen zu können, ohne dass sie sich überlappen, umfasst die Abbildungsvorrichtung daher ein optisches Element für die Verschiebung des Projektionsbildes um die Breite und/oder Höhe eines Bildpunktes 8 des Projektionsbildes 7. Die Verschiebung des projizierten Teilbildes erfolgt entsprechend dem jeweiligen Teilbild in vertikaler und/oder horizontaler Richtung. Um die Abfolge der Teilbilder zu verdeutlichen sind in den LCD-Elementen 6 der LCD-Vorrichtung 3 jeweils alle Bilddaten aus den Speicherzellen 2 bezeichnet, die mit diesem LCD-Element verarbeitet werden.

Das Projektionsbild 7 setzt sich aus einzelnen Bildpunkten 8 zusammen die entsprechend den Bilddaten in den Speicherzellen 2 benannt sind.

Wenn eines der mehreren LCD-Elemente 6 der LCD-Vorrichtung 3 defekt ist, führt dies zum Ausfall aller mit diesem defekten LCD-Element dargestellten Bildpunkte. Bei dem Verfahren nach dem Stand der Technik, das in Fig. 1 dargestellt ist, werden somit bei einem fehlerhaften LCD-Element entsprechend große Fehlstellen in dem Projektionsbild 7 erzeugt. Ist also beispielsweise das LCD-Element in der zweiten Spalte und der zweiten Zeile der LCD-Vorrichtung 3 defekt, welches mit den Bilddaten CC, DC,DD und CD angesteuert wird, so ergibt sich in dem Projektionsbild 7 eine Fehlstelle, die den Bildpunkten CC, DC, DD und CD entspricht. Damit ergibt sich ein für das Auge des Betrachters deutlich sichtbarer Bildfehler.

Um die Entstehung solcher Bildfehler in dem Projektionsbild 7 bei einem defekten LCD-Element zu vermeiden, wird das bekannte Verfahren erfindungsgemäß dahingehend abgewandelt, dass jeder Bildpunkt in dem Projektionsbild 7 von einem LCD-Element der LCD-Vorrichtung 3 erzeugt wird, das keinen der Nachbar-Bildpunkte dieses Bildpunktes erzeugt hat.

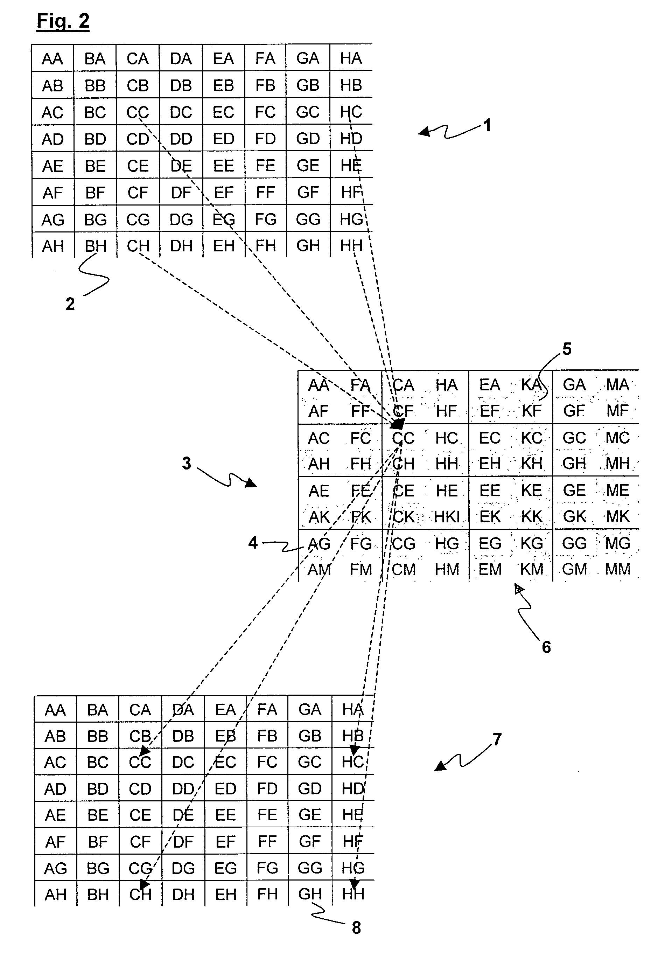

Zur Veranschaulichung des erfindungsgemäßen Verfahrens ist in Fig. 2 ein Teil der Bilddaten eines Bildes in der Speicherebene 1 dargestellt. Die Bilddaten in den einzelnen Speicherzellen 2 sind wiederum wie in Fig. 1 bezeichnet.

Die LCD-Vorrichtung 3 ist ebenfalls nur ausschnittsweise, ähnlich wie die Speicherebene 1, dargestellt. Auch in Fig. 2 sind in der Black-Matrix 5 und dem aktiven Viertel 4 die Bildpunkte bezeichnet, die durch das jeweilige LCD-Element 6 aufbelichtet werden

Bevorzugt wird die Bildinformation wieder in vier Teilbilder aufgeteilt. Für das erste Teilbild werden - genau wie bei dem in Fig. 1 beschriebenen Verfahren - diejenigen Bilddaten verwendet, die mit einer Kombination der Buchstaben A, C, E oder G bestehen. Das zweite Teilbild verwendet Bilddaten mit Buchstabenkombinationen aus einem ersten Buchstaben F, H, K oder M und einem zweiten Buchstaben A, C, E oder G. Das dritte Teilbild benutzt Bilddaten mit Buchstabenkombinationen deren erster als auch zweiter Buchstabe ein F, H, K oder M ist, während die Bilddaten für das vierte Teilbild als ersten Buchstaben ein A,C,E oder G und als zweiten Buchstaben ein F, H, K oder M aufweisen.

Die Belichtung des ersten Teilbildes wird wie in dem Beispiel nach Fig. 1 durchgeführt. Für die Belichtung des zweiten Teilbildes wird die Projektion dieses Teilbildes in die Bildebene nun aber nicht um die Breite eines Bildpunktes 8 sondern um die Breite von fünf Bildpunkten in horizontaler Richtung verschoben. Bei der Verschiebung muss es sich um eine ungerade Anzahl von Bildpunkten handeln.

Das gleiche gilt für die Belichtung des dritten Teilbildes, wobei eine Verschiebung in vertikaler Richtung stattfindet. In dem gezeigten Ausführungsbeispiel wird das um einen Betrag von ebenfalls der fünffachen Höhe eines Bildpunktes verschoben. Es könnte jedoch auch eine Verschiebung um ein anderes ungerades Vielfaches der Höhe eines Bildpunktes vorgenommen werden. Die Verschiebung in vertikaler und horizontaler Richtung muss nicht die gleiche Anzahl von Bildpunkten betragen. Für das vierte Teilbild findet dann wieder eine Verschiebung in horizontaler Richtung um den gleichen Betrag aber entgegengesetzt zur Verschiebung für das zweite Teilbild statt.

Die einzelnen Teilbilder werden nacheinander belichtet und erzeugen so eine Abfolge von Abbildungen, die dann das Gesamtbild 7 ergeben. Bei der Belichtung der einzelnen Teilbilder wird die jeweilige Verschiebung der Bilddaten aus den Speicherzellen 2 der Speicherebene 1 bei der Übertragung an die LCD-Vorrichtung 3 durch die Verschiebung rückgängig gemacht, so dass in der Bildebene genau das Bild entsteht, das in der Speicherebene 1 abgelegt ist, d.h. die Reihenfolge und Anordnung der Bildpunkte 8 entspricht exakt den in den Speicherzellen 2 der Speicherebene 1 abgelegten Bilddaten.

Wie in Fig. 1 wird auch in Fig. 2 wieder davon ausgegangen, dass das LCD-Element in der zweiten Spalte der zweiten Zeile der LCD-Vorrichtung 3 defekt ist. Mit diesem defekten LCD-Element würden normalerweise die Bilddaten CC, HC, HH und CH aufbelichtet. Da die Anordnung im Speicher auch der Anordnung der resultierenden Bildpunkte in dem belichteten Bild 7 entspricht, liegen die durch das defekte LCD-Element erzeugten schwarzen Bildpunkte CC, HC, HH und CH nicht in direkter Nachbarschaft sondern sind entsprechend voneinander beabstandet. So liegt der fehlerhafte Bildpunkt CC fünf Spalten links von dem fehlerhaften Bildpunkt HC, fünf Zeilen über dem fehlerhaften Bildpunkt CH und fünf Zeilen über und fünf Spalten links von dem fehlerhaften Bildpunkt HH.

Damit wird erreicht, dass der durch das fehlerhafte LCD-Element verursachte Bildfehler auf vier kleine auseinander liegende Punkte verteilt wird, die für das Auge weniger störend sind als der Bildfehler, der sich mit dem Verfahren nach dem Stand ergibt und in Fig. 1 gezeigt ist.

Die Erfindung ist nicht auf die oben beschriebene Ausführungsform beschränkt. So wurde in der Beschreibung von Fig. 1 und 2 davon ausgegangen, dass Bilddaten aus vier Speicherzellen 2 mit einem LCD-Element 6 dargestellt werden. Selbstverständlich können jedoch auch Bilddaten beispielsweise aus sechs, acht, neun, zwölf, oder sechzehn Speicherzellen 2 mit einem LCD-Element 6 dargestellt werden. In diesen Fällen werden nicht vier sondern entsprechend sechs, acht, neun, zwölf, oder sechzehn Teilbilder erzeugt. Auch hier soll der Abstand der Bildpunkte 8, die durch ein LCD-Element erzeugt werden, so gewählt werden, dass bei einem defekten LCD-Element die erzeugten Bildpunkte vom Auge nicht als ein zusammenhängender Bildpunkt wahrgenommen werden.

Die Verschiebung der einzelnen Teilbilder kann auch abhängig von der Farbe gewählt werden. So könnte man beispielsweise vier Teilbilder des Rot-Auszuges um 5 Bildpunkte, die des Grün-Auszuges um 7 Bildpunkte und die des Blau-Auszuges um 9 Bildpunkte verschieben. Ein defektes LCD-Element würde in diesem Fall in jedem Farbauszug an eine andere Stelle belichtet und damit für das menschliche Auge noch weniger auffällig sein.

Die einzelnen Farbauszüge können in bekannter Weise entweder über eine weiße Lichtquelle und entsprechende Farbfilter oder über farbige Lichtquellen wie z. B. LEDs erstellt werden.

## Patentansprüche

1. Verfahren zum pixelweisen Erzeugen von Bildern auf einem Bildträger (7), bei dem eine Vielzahl von Pixeln gleichzeitig erzeugt wird, mit den folgenden Schritten:
Erzeugen wenigstens eines Teilbildes auf dem Bildträger (7) mit Abständen zwischen den einzelnen Bildpunkten (8), wobei jedem Bildpunkt ein Pixelgenerator (6) zugeordnet ist, und
Erzeugen wenigstens eines weiteren Teilbildes auf dem Bildträger (7) in den Zwischenräumen der Bildpunkte (8) des ersten Teilbildes,
**dadurch gekennzeichnet, dass** jedes Pixel des weiteren Teilbildes von einem Pixelgenerator (6) erzeugt wird, der keines der Nachbarpixel aus dem ersten Teilbild erzeugt hat.

2. Verfahren nach Anspruch 1, **dadurch gekennzeichnet, dass** vier Teilbilder erzeugt werden, wobei jedes projizierte Teilbild gegenüber dem vorherigen Teilbild um die Breite bzw. Länge von wenigstens 3 Bildpunkten (8) verschoben wird.

3. Verfahren nach Anspruch 2, **dadurch gekennzeichnet, dass** der Abstand der Bildpunkte (8) zwischen je zwei Teilbildern in eine erste Richtung und der Abstand der Bildpunkte zwischen je zwei Teilbildern in eine zweite Richtung unterschiedlich sind.

4. Verfahren nach einem der vorangehenden Ansprüche, **dadurch gekennzeichnet, dass** der Abstand der Bildpunkte (8) zwischen je zwei Teilbildern von einer Abbildungsfarbe abhängt.
